# EUROPÄISCHE PATENTSCHRIFT

(11) **EP 1 024 097 B1**
(45) Veröffentlichungstag und Bekanntmachung des Hinweises auf die Patenterteilung: **28.04.2004**
(21) Anmeldenummer: 00101805.0
(22) Anmeldetag: 28.01.2000
(51) Int. Cl.: B65G 17/24, B65G 21/22

(54) **Kettenförderer**
Chain conveyor
Transporteur à chaîne

(30) Priorität: 28.01.1999 DE 19903464
(43) Veröffentlichungstag der Anmeldung: 02.08.2000
(73) Patentinhaber: ALTRATEC MONTAGESYSTEME GmbH, D-71701 Schwieberdingen (DE)
(72) Erfinder: Hauf, Hans, 71701 Schwieberdingen (DE)
(74) Vertreter: Jeck, Anton, Dipl.-Ing.

(56) Entgegenhaltungen:
- EP-A- 0 678 463
- EP-A- 0 819 635
- EP-A- 0 827 922
- DE-A- 4 228 720
- DE-A- 19 546 986
- DE-B- 1 099 936
- DE-C- 957 374
- PATENT ABSTRACTS OF JAPAN vol. 014, no. 262 (M-0981), 6. Juni 1990 (1990-06-06) & JP 02 075513 A (TOSHIBA CORP), 15. März 1990 (1990-03-15)

## Beschreibung

Die Erfindung betrifft einen Kettenförderer gemäß dem Oberbegriff des Anspruchs 1.

Ein derartiger Kettenförderer ist aus der EP-A1-0 827 922 bekannt. Dort ist ein Tragelement offenbart, das aus einer Profilschiene mit zwei untereinanderliegenden Kammern gebildet wird. In Innennuten der oberen Kammer sind zwei kreisrunde Querschnittsflächen aufweisende Fahrschienen eingelegt, auf denen die Laufrollen der Kette abrollen. Dabei ist die Berührungsfläche der Laufrollen mit den Fahrschienen sehr gering (punktförmig), so daß eine hohe Punktbelastung an Laufrollen und Fahrschienen und damit hoher Verschleiß auftreten. Die Außenkanten der Laufrollen sind mit Führungsflächen (Abschrägungen) versehen, und in die obere Kammer sind seitlich von den Fahrschienen weitere, eine kreisförmige Querschnittsfläche aufweisende Führungsschienen eingelegt, die von den Führungsflächen punktförmig berührt werden. Dadurch ist zwar eine verhältnismäßig wartungs- und geräuscharme Seitenführung der Kette möglich, aber auch bei dieser Seitenführung tritt eine hohe punktförmige Belastung auf. Beim Auftreten von seitlichen Kräften auf die Kette durch die zu transportierenden Werkstücke treten durch die seitlich auflaufenden Rollen an der Führung Reibungskräfte der Laufrollen an den Kettenlaschen auf, die zu erhöhtem Verschleiß führen können.

Bei dem Kettenförderer gemäß dieser Schrift werden zur Aufnahme des Tranportguts Tragstücke verwendet, die als Staurollen ausgebildet sind. Diese Staurollen sind um die Bolzen der Kette zwischen den Kettenlaschen drehbar gelagert. Zur Aufnahme des Transportguts können jedoch auch, wie es beispielsweise in der EP-A2-0678 463 offenbart ist, an Stelle der Staurollen als Tragstücke feststehend mit der Kette verbundene Tragplatten dienen, auf denen ein Transportschlitten ruhen kann.

Durch die Schriften DE-OS 14 31 667, DE-AS 11 06 685, DE-AS 1 099 936, DE-A1-197 31 846 und DE-PS 957 374 sind Fördervorrichtungen bekannt, die mit Fahrschienen und auf diesen abrollenden Tragrollen arbeiten.

Bei der DE-OS 14 31 667 hat ein fahrbarer Ständer einen Längsträger, an dem oben und unten jeweils ein Paar Rollen drehbar befestigt sind. Die Rollen weisen an ihrem Umfang jeweils eine keilförmige Rille auf, die an keilförmigen Führungsleisten von stationären, oberen und unteren Schienen angepasst sind. Transportketten und Staurollen sind nicht vorgesehen.

Bei der DE-AS 11 06 685 hat eine Rollenkette eines Stahlgliederförderbandes Rollen, die an ihrem Laufumfang jeweils eine keilförmige Rille aufweisen, die auf keilförmigen, an die Rillenform der Rolle angepassten und aus Blechen bestehenden Fahrschienen laufen.

Bei der DE-AS 1 099 936 liegt ein seilbetriebenes Förderband mit einem dreiarmigen Rollenträger vor, an dem Rollen dreieckförmig angeordnet sind, die auf einer im Querschnitt dreieckförmigen Fahrschiene abrollen. Die Fahrschiene ist an ihrem Umfang so gerundet und die Rollen sind mit solch runden Rillen versehen, daß die Rundungen formschlüssig ineinandergreifen.

Bei der DE-A1-197 31 846 arbeitet eine Förderbahn mit dreibahnigen Rollen, die runde Rillen aufweisen und auf runden, den Rillen angepassten Schienen gleiten.

Bei der DE-PS 957 374 arbeitet ein Förderband mit Rollen, die an ihrem Umfang jeweils mit runden Rillen versehen sind, und mit runden Fahrschienen, wobei diese Rundungen aneinander angepasst sind.

Die Aufgabe der Erfindung besteht darin, einen Kettenförderer der im Oberbegriff des Anspruchs 1 genannten Art zu schaffen, bei dem der Verschleiß von Laufrollen und Fahrschienen vermindert ist, eine Seitenführung der Kette mit einfacheren Mitteln ermöglicht wird und gleichzeitig ein noch geräuschärmerer Lauf der Laufrollen auf den Fahrschienen erreicht wird.

Diese Aufgabe wird mit den Merkmalen des Anspruchs 1 gelöst.

Durch die an die Rundung der Fahrschienen angepaßten Rillen der Laufrollen wird ein seitliches Ausbrechen der Kette durch Selbstzentrierung in einfacher und wirksamer Weise verhindert. Die Belastung der Kette durch das Transportgut verteilt sich auf eine große Berührungsfläche zwischen Laufrollen und Fahrschienen.

Durch die zwei weiteren, gleich wie die beiden ersten Fahrschienen ausgebildeten und unterhalb diesen im Tragelement zur Führung der Laufrollen des unteren Kettentrums eingelegten Fahrschienen werden gleiche Fahrschienen für den Vorlauf und den Rücklauf der Kette verwendet.

Gemäß einer weiteren Ausbildung der Erfindung ist jeweils mindestens ein Tragstück je Kettenstrang durch eine Rundbürste aus einem Laufring und daran angeordneten Borsten ersetzt. Damit können Fahrschienenverschmutzungen, wie sie insbesondere beim Einsatz des Kettenförderers bei spanabhebenden Maschinen vorkommen können, verhindert werden.

Die Erfindung wird nun anhand eines Ausführungsbeispiels näher erläutert. Es zeigen:
- Fig. 1: einen Querschnitt durch ein als Doppelkammerschienenprofil ausgebildetes Tragelement, durch in dieses Tragelement eingelegte, im Querschnitt runde Fahrschienen und durch eine Kette, bei der als Tragstücke Tragplatten verwendet sind,
- Fig. 2: eine Seitenansicht eines Kettenteils der in Fig. 1 verwendeten Kette,
- Fig. 3: einen der Fig. 1 ähnlichen Querschnitt, bei dem jedoch statt im Querschnitt runde vierkantige Fahrschienen mit konkav ausgeformter Rollenführung verwendet sind,
- Fig. 4: eine der Fig. 2 ähnliche Ansicht eines Kettenteils, bei dem als Tragstück verwendete Tragplatten durch eine Rundbürste ersetzt sind,
- Fig. 5: einen der Fig. 1 ähnlichen Querschnitt, bei dem für die Kette als Tragstücke Staurollen verwendet sind, und
- Fig. 6: eine Seitenansicht eines Kettenteils der in Fig. 5 verwendeten Kette, bei der als Tragstück verwendete Staurollen durch eine Rundbürste ersetzt sind.

Der grundsätzliche Aufbau des Kettenförderers ist den Figuren nicht zu entnehmen, weil ihn die Erfindung nicht unmittelbar betrifft; er wird jedoch zum besseren Verständnis der Erfindung nachfolgend kurz beschrieben.

Der Kettenförderer besteht im wesentlichen aus zwei im Abstand parallel geführten und in Förderrichtung verlaufenden Ketten, von denen in den Figuren nur eine Kette 1 gezeigt ist. Diese Ketten sind jeweils endlos umlaufend ausgebildet und am jeweiligen Ende des Kettenförderers um ein Umlenkrad geführt. Zwischen den Umlenkrädern der Kettenfördererenden sind jeweils Tragelemente 2 angeordnet, die die Kette 1 und das darauf geförderte Transportgut 3 bzw. eine dieses tragende Führungslasche abstützen. Bei Staurollenförderern können auf den Ketten beispielsweise Paletten gefördert werden, die Werkstücke zu deren Bearbeitung zwischen den einzelnen Bearbeitungs-stationen transportieren.

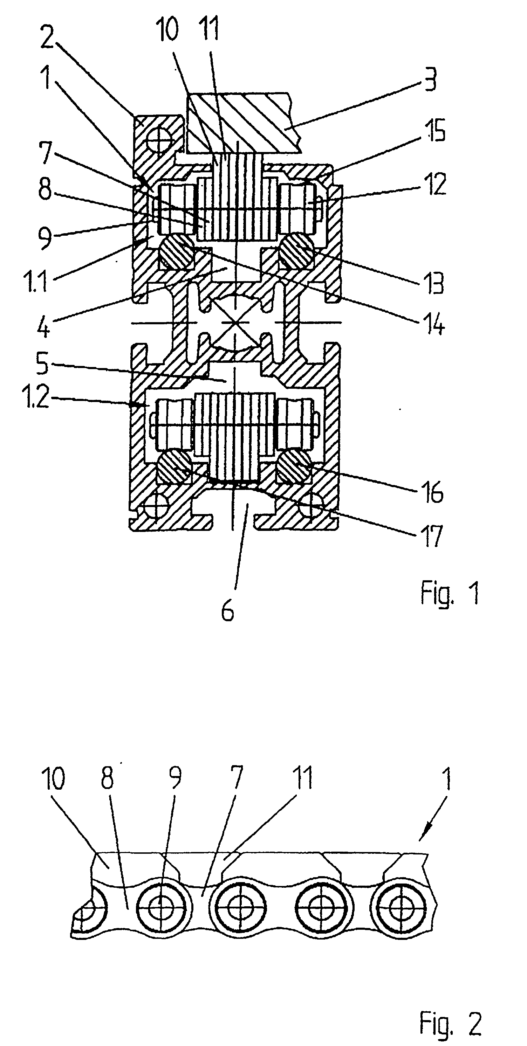

Das in Fig. 1 dargestellte Tragelement 2 ist als Doppelkammerschienenprofil mit zwei übereinander angeordneten Kammern 4, 5 zur Aufnahme des Obertrums 1.1 und des Untertrums 1.2 der Kette 1 ausgebildet. Das Tragelement 2 ist mit mehreren in Längsrichtung des Tragelements 2 verlaufenden Befestigungsnuten, wie der Befestigungsnut 6, zur Aufnahme von nicht dargestellten Nutsteinen für die Befestigung des Tragelements oder von weiteren Bauteilen hieran und mit einem an der Oberseite des Tragelements 2 angeordeneten, nach oben ragenden, leistenartigen Teil 7 zur seitlichen Führung des Transportguts bzw. der Führungslasche 3 versehen.

Die Kette 1 besteht aus inneren und äußeren Laschen, wie der inneren Lasche 7 und der äußeren Lasche 8, die jeweils auf einem Bolzen, wie dem Bolzen 9, drehbar gelagert und mit benachbarten Bolzen der Kette drehbar verbunden sind. Auf jedem Bolzen 9 sind zwischen den inneren Laschen eines Kettengliedes mehrere Tragstücke in Form von Tragplatten, wie die Tragplatten 10, 11, fest angeordnet, die beim Obertrum 1.1 der Kette 1 aus einer Öffnung der Kammer 4 herausragen und das Transportgut 3 tragen. Die herausragenden Enden dieser Tragplatten finden beim Untertrum 1.2 der Kette 1 in einer Innennut der geschlossenen Kammer 5 Platz. Die Bolzen 9 sind seitlich über die äußeren Laschen 8 hinaus verlängert, um Laufrollen, wie die Laufrolle 12, drehbar aufzunehmen, über die die Kette 1 in den Kammern 4, 5 des Tragelements 2 abgestützt sind.

Die Laufflächen des Tragelements 2 sind durch im Querschnitt kreisrunde Fahrschienen 13, 14 gebildet, die in Innennuten der Kammer 4 eingelegt sind. Diese Fahrschienen bestehen vorzugsweise aus Stahl, oder aus Kunststoff. Erfindungsgemäß sind nun die Laufrollen 12 auf ihrem Laufumfang mit jeweils einer Rille, wie der Rille 15, versehen, die an die Rundung der Fahrschiene 13 bzw. 14 angepaßt ist. Dadurch wird eine selbstzentrierende, exakte Seitenführung der Kette 1 ermöglicht, und gleichzeitig wird die Belastung der Kette 1 durch das Transportgut 3 auf eine große Lauffläche verteilt. Das Laufgeräusch der Kette 1 hält sich dabei in Grenzen.

Zwei weitere Fahrschienen 16, 17 sind in Innennuten der Kammer 5 angeordnet und gleich wie die Fahrschienen 13, 14 ausgebildet. Auf den Fahrschienen 16, 17 rollt das rücklaufende Untertrum 1.2 der Kette 1 mittels der Laufrollen 12 ab, wobei auch hier die Kette 1 mittels der Rillen 15 seitlich exakt geführt wird.

In Fig. 2 ist ein Teil der in Fig. 1 gezeigten Kette 1 dargestellt. Insbesondere ist die Anordnung der Kettenlaschen 7, 8, der Bolzen 9 und der Tragplatten 10, 11 zu erkennen. Die Tragplatten 10, 11 sind an den oberen Seitenkanten angeschrägt, um die Kette 1 aus der Geraden beidseitigabwinkeln zu können.

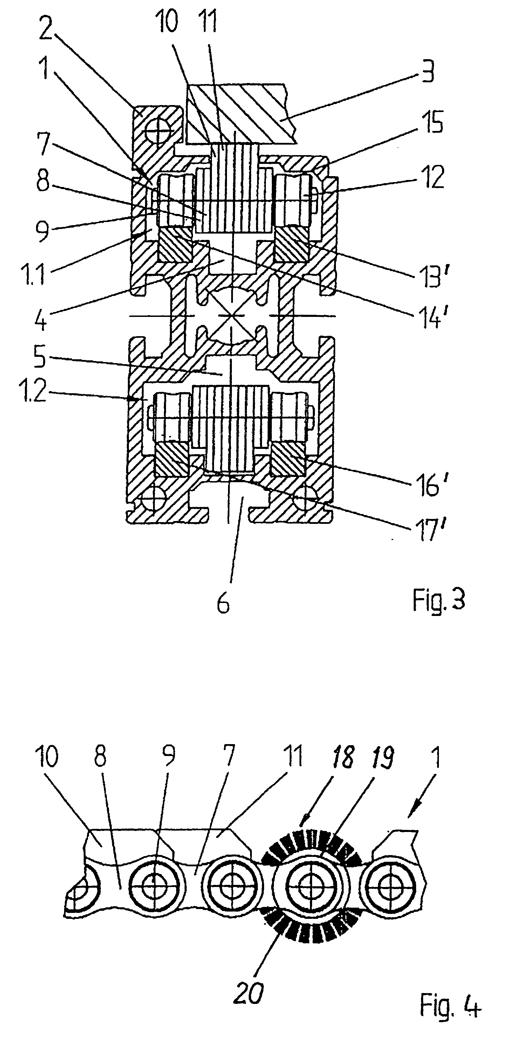

In Fig. 3 ist wieder das vorbeschriebene Tragelement 1 mit Kette 1 der Fig. 1 dargestellt, doch haben hier die Fahrschienen 13', 14', 16', 17' eine im Querschnitt vierkantige Form. Diese Fahrschienen haben aber ebenfalls auf ihrer oberen Seite eine leichte, sich nach außen erstreckende Rundung, an die die Rille 15 angepaßt ist. Die Traglast wird dann von der zylindrischen Restlauffläche und von der Rille 15 aufgenommen.

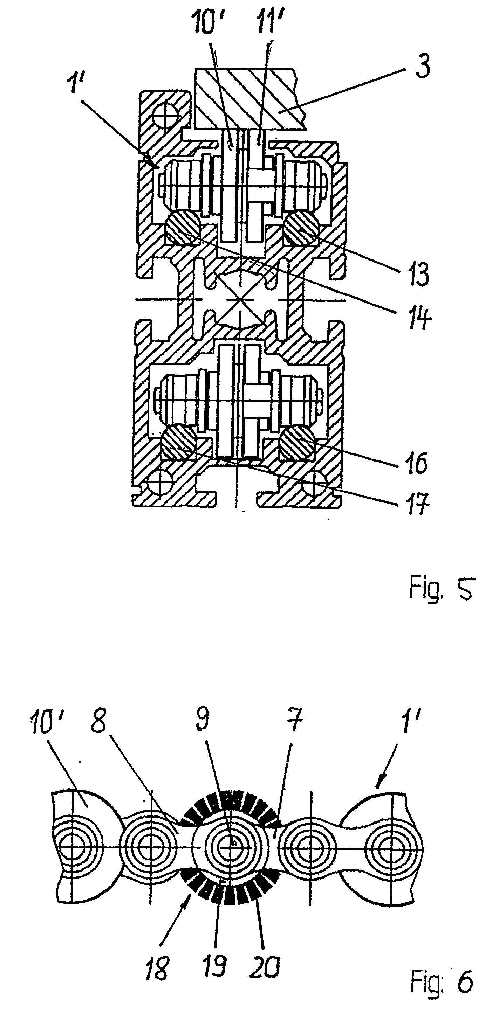

Wie in Fig. 4 gezeigt ist, sind die auf einem Bolzen 9 sitzenden Tragplatten (10, 11) durch eine Rundbürste 18 ersetzt, die aus einem Laufring 19 und aus Borsten 20 besteht, die auf dem Außenumfang des Laufrings 19 angeordnet sind. Diese Rundbürste dient zur Reinigung der zugeordneten Kammern des Tragelements 2 und hält Schmutz und/oder Späne von den Fahrschienen 13', 14', 16', 17' fern. Vorzugsweise ist je Kettenstrang auf jedem zwanzigsten Bolzen 9 der Kette 1 eine solche Rundbürste 18 angeordnet.

In Fig. 5 ist wieder das vorbeschriebene Tragelement 1 mit Fahrschienen 13, 14, 16, 17 der Fig. 1 dargestellt, doch hat hier die Kette 1' statt der Tragplatten 10, 11 als Tragstücke Staurollen 10', 11 '. Die Staurollen sind auf den Bolzen 9 drehbar angeordnet und tragen das Transportgut 3.

Gemäß Fig. 6 kann die Kette 1' ebenfalls in der anhand der Fig. 4 beschriebenen Weise mit einer Rundbürste 18 versehen sein, die an die Stelle der auf einem Bolzen 9 gelagerten Staurollen (10', 11 ') tritt.

## Patentansprüche

1. Kettenförderer für Transportgut mit mindestens einer endlos über Umlenkräder geführten Kette, mit zwei zwischen den Umlenkrädern angeordneten, in Förderrichtung verlaufenden, in einem Tragelement eingelegten und eine mindestens teilweise runde Querschnittsfläche aufweisenden Fahrschienen zur Abstützung der Kette über Laufrollen, die an beidseitig über die Kette hinaus verlängerten Bolzen der Kette gelagert und seitlich im Tragelement geführt sind, und mit an der Kette befestigten und über diese in Richtung auf das Transportgut hinausragenden Tragstücken zur Aufnahme des Transportguts,
**dadurch gekennzeichnet,**
**dass** jede Laufrolle (12) an ihrem Laufumfang eine Rille (15) aufweist, die an die Rundung der Fahrschiene (13, 14, 13', 14') angepasst ist, und dass zwei weitere, gleich wie die beiden ersten Fahrschienen (13, 14 bzw. 13', 14) ausgebildete Fahrschienen (16, 17'bzw. 16', 17) unterhalb der beiden ersten Fahrschienen (13, 14 bzw. 13', 14') im Tragelement (2) zur Führung der Laufrollen (12) des unteren Kettentrums (1.2) eingelegt sind.

2. Kettenförderer nach Anspruch 1,
**dadurch gekennzeichnet,**
**dass** jeweils ein Tragstück (10, 11 bzw. 10', 11') oder einige wenige Tragstücke je Kettenstrang durch je eine Rundbürste (18) aus einem Laufring (19) und daran angeordneten Borsten (20) ersetzt ist bzw. sind.

3. Kettenförderer, nach einem der Ansprüche 1 oder 2,
**dadurch gekennzeichnet,**
**dass** die Kette wahlweise mit mittig angeordneten Staurollen oder geradlaschigen Tragelementen ausgerüstet ist.

4. Kettenförderer, nach einem der Ansprüche 1 bis 3,
**dadurch gekennzeichnet,**
**dass** die Kette auch auf quadratisch ausgebildeten Fahrschienen laufen kann, da die Rollen eine zylindrische Restlauffläche aufweisen.

## Claims

1. Chain conveyor for transporting goods, having at least one chain which is guided endlessly over deflection wheels, having two running rails, which are disposed between the deflection wheels, extend in the conveying direction, are inserted in a carrier element and have an at least partially round cross-sectional area, for supporting the chain via running rollers which are mounted on bolts of the chain, which bolts are elongated on both sides beyond the chain and guided laterally in the carrier element, and having carrier parts for receiving the goods to be transported, which are secured on the chain and project beyond the latter in the direction of the goods to be transported,
**characterised in that**
each running roller (12) has a groove (15) on its running circumference, which groove is adapted to the rounding of the running rail (13, 14, 13', 14'), and **in that** two further running rails (16, 17' or respectively 16', 17), which are configured identically to the two first running rails (13, 14 or respectively 13', 14'), are inserted below the two first running rails (13, 14 or respectively 13', 14') in the carrier element (2) for guiding the running rollers (12) of the lower chain strand (1.2).

2. Chain conveyor according to claim 1,
**characterised in that**
respectively one carrier part (10, 11 or respectively 10', 11') or a few carrier parts per chain strand is or respectively are replaced by a round brush respectively (18) comprising a bearing race (19) and bristles (20) disposed thereon.

3. Chain conveyor according to one of the claims 1 or 2, **characterised in that**
the chain is optionally equipped with centrally disposed accumulating rollers or linear-link carrier elements.

4. Chain conveyor according to one of the claims 1 to 3,
**characterised in that**
the chain can also run upon quadratically configured running rails since the rollers have a cylindrical residual running face.

## Revendications

1. Transporteur à chaîne pour le transport de marchandises avec au moins une chaîne sans fin entraînée par des poulies de renvoi, avec deux rails adaptés entre les poulies de renvoi, se déplaçant dans la direction de transport et insérés dans un organe de suspension et au moins une surface de la section droite, en partie ronde et comportant des rails de roulement pour l'étaiement de la chaîne au-dessus des galets de roulement, lesquels sont positionnés de chaque côté au-dessus des boulons de la chaîne, allongés, dépassant de la chaîne et sont guidés latéralement dans l'organe de suspension, et avec des éléments porteurs, fixés à la chaîne, destinés à la réception de la marchandise transportée et faisant saillie au-dessus de la chaîne, dans la direction prise par la marchandise à transporter **caractérisé en ce que** chaque galet de roulement (12) comporte sur sa périphérie de roulement une rainure (15) qui est adaptée à l'arrondi du rail de roulement (13, 14, 13', 14') et que deux autres rails de roulement (16, 17 et / ou 16', 17') identiques aux deux premiers sont disposés en dessous des deux premiers rails de roulement (13, 14 et / ou 13', 14') dans l'organe de suspension (2) afin de guider les galets de roulement (12) du brin de chaîne inférieur (1, 2).

2. Transporteur à chaîne selon la revendication 1, **caractérisé en ce que** chaque pièce porteuse (10, 11 et / ou 10', 11') ou bien un petit nombre de pièces porteuses par brin de chaîne est et / ou sont remplacée(s) par une brosse circulaire (18) à partir d'un anneau de roulement (19) et des brins (20) qui y sont adaptés.

3. Transporteur à chaîne selon une des revendications 1 ou 2,**caractérisé en ce que** la chaîne est équipée au choix avec des rouleaux disposés au centre ou avec des organes de suspension droits et souples.

4. Transporteur à chaîne selon une des revendications 1 à 3,**caractérisé en ce que** la chaîne peut également fonctionner sur des rails de guidage ayant une forme carrée étant donné que les rouleaux comportent une surface de roulement restante cylindrique.
